# EUROPEAN PATENT SPECIFICATION

(11) **EP 4 458 516 B1**
(45) Date of publication and mention of the grant of the patent: **28.01.2026**
(21) Application number: 24169210.2
(22) Date of filing: 09.04.2024
(51) Int. Cl.: B25B 23/14, B23P 19/06, B25B 23/147, G01L 5/24, G06N 3/02, G06N 20/00

(54) **ML ESTIMATION OF TIGHTENING CLASSES**
ML-SCHÄTZUNG VON STRAFFUNGSKLASSEN
ESTIMATION ML DE CLASSES DE SERRAGE

(30) Priority: 04.05.2023 SE 2330200
(43) Date of publication of application: 06.11.2024
(73) Proprietor: Atlas Copco Industrial Technique AB, 105 23 Stockholm (SE)
(72) Inventor: Tang, Lifei, 131 48 Nacka (SE); Hanus, Wojciech, 124 32 Bandhagen (SE); Wilkman, Dennis, 118 21 Stockholm (SE); Aldenfalk, Staffan, 171 55 Solna (SE); Gustafsson, Joakim, 141 32 Huddinge (SE)
(74) Representative: Atlas Copco Industrial Technique AB

(56) References cited:
- EP-A1- 3 623 108
- WO-A1-2022/232297
- JP-A- H06 206 127

## Description

### TECHNICAL FIELD

The present disclosure relates to a method for determining a tightening class of a tightening operation performed by a tightening tool, and a device performing the method.

Further, a computer program is provided comprising computer-executable instructions for causing the device to perform steps of the method when the computer-executable instructions are executed on a processing unit included in the device.

Moreover, a computer program product is provided comprising a computer readable medium, the computer readable medium having the computer program embodied thereon.

### BACKGROUND

During tightening of a fastener such as a bolt or a screw using a tightening tool, there are several undesired tightening results that may occur for the bolt or screw being tightened.

Analysing sensor data from the tightening tool provides valuable insight as regards the tightening result. Analytical models may be developed to determine the tightening result based on sensor data from the tightening tool.

However, whether or not a tightening result is correct may be difficult to determine by a human operator or a machine, and is further burdensome and time consuming.

To this end, machine-learning (ML) may be used to analyse the torque and angles tightening results. However, appropriate training of the ML model is crucial for the ML model to subsequently perform accurate tightening estimations.

EP 3 623 108 discloses a method according to the preamble of claim 1 and an apparatus according to the preamble of claim 10 for detecting tightening quality of a tightening tool and a storage medium. The method for detecting tightening quality of a tightening tool comprises obtaining tightening data generated during a tightening process of the tightening tool, and generating a tightening curve representing change of the tightening data over time; and performing pattern recognition on the tightening curve to classify the tightening curve, wherein a different category of the tightening curve corresponds to a different category of tightening quality of the tightening tool.

JP H06 206127 discloses a neural network which is applied with learning processing so that an estimated axial force can be obtained in screw tightening.

WO 2022/232297 discloses a power tool including a housing, a motor, a first sensor configured to generate first sensor data related to a movement of the power tool, and a controller. The controller is configured to receive the first sensor data from the first sensor between a first operation and second operation of the power tool, wherein the first sensor data is related to the movement of the power tool, determine a change in position of the power tool based on the first sensor data, determine that the second operation of the power tool is complete based on the change in position of the power tool, and output an indication to a user interface to alert a user that the second operation was completed.

### SUMMARY

One objective is to solve, or at least mitigate, this problem in the art and thus to provide an improved method for determining a tightening class of a tightening operation performed by a tightening tool.

In a first aspect, the invention provides a method, according to claim 1, for determining a tightening class of a tightening operation performed by a tightening tool. The method comprises acquiring a set of observed torque and angle values for a fastener having been tightened by the tightening tool, acquiring at least one set of context data associated with the tightening of the fastener by the tightening tool, associating at least one tightening class with the set of observed torque and angle values and the at least one set of context data, the tightening class identifying a type of tightening operation having been applied to the fastener, training a machine-learning model with the acquired set of observed torque and angle values, the acquired at least one set of context data and the associated at least one tightening class, and supplying the trained machine-learning model with a further acquired set of observed torque and angle values for a fastener having been tightened by the tightening tool and at least one further set of context data associated with the tightening of the fastener by the tightening tool, wherein the trained machine-learning model outputs at least one estimated tightening class for the supplied further set of observed torque and angle values and the at least one further set of context data.

In a second aspect, the invention provides a device, according to claim 10, configured to determine a tightening class of a tightening operation performed by a tightening tool. The device comprises a processing unit operative to cause the device to acquire a set of observed torque and angle values for a fastener having been tightened by the tightening tool, acquire at least one set of context data associated with the tightening of the fastener by the tightening tool, associate at least one tightening class with the set of observed torque and angle values and the at least one set of context data, the tightening class identifying a type of tightening operation having been applied to the fastener, train a machine-learning model with the acquired set of observed torque and angle values, the acquired at least one set of context data and the associated at least one tightening class, and to supply the trained machine-learning model with a further acquired set of observed torque and angle values for a fastener having been tightened by the tightening tool and at least one further set of context data associated with the tightening of the fastener by the tightening tool, wherein the trained machine-learning model outputs at least one estimated tightening class for the supplied further set of observed torque and angle values and the at least one further set of context data.

In practice, it may occur that the tightening classes estimated by a trained ML model is incorrect. For instance, it may be that the trained ML model for some reason is not a good fit for a given individual tool, that the trained ML model performs poorly for a tightening tool of one type but performs well for another similar type of tightening tool, or more straightforwardly that a set of torque and angle values shows characteristics which may be correctly associated with more than one tightening class.

In another example, it may be envisaged that the ML model is sensitive to a given tightening application or environment; for instance, it may be envisaged that the trained ML model performs highly accurate tightening class estimations for small-scale bolts but less accurate estimations not for large-scale bolts, or that the trained ML model fits well with one type of joint to be tightened but not with another type, and so on.

Thus, to provide for a better trained ML model which ultimately will perform more accurate estimations of tightening class(es) associated with sets of torque and angle values being input to the trained ML model, it is proposed that the training of the ML model further advantageously includes training the ML model by utilizing carefully selected context data.

Context data may be data related to the current or one or more previous tightenings *further to* the trace data of the current tightening (i.e. the observed torque and angle values of the current tightening). The context data may thus place the observed torque and angle values in a context that can be helpful for the ML model to determine a tightening class. Further envisaged context data to be considered is environmental data such as e.g. temperature, humidity, atmospheric pressure, etc., or even settings of the tool or computer program executing on the tool such as for instance target torque and angle values to be applied.

According to the invention the context data comprises at least one of torque and angle values having been applied by the tightening tool during a previously performed tightening operation.

In an embodiment, the context data comprises properties of the fastener and/or joint being tightened by the fastener.

In an embodiment, the context data comprises environmental properties such as e.g. temperature, humidity, atmospheric pressure, etc.

In an embodiment, an alert is provided indicating the at least one estimated tightening class.

In an embodiment, the alert is provided to an operator of the tightening tool, to the tightening tool itself, to a supervision control room or to a remote cloud function.

In an embodiment, the tightening tool provides an audible and/or visual alert to the operator of the tool.

In an embodiment, the machine learning is based on one or more of neural networks, random forest-based classification and regression analysis.

In a third aspect, a computer program according to claim 8 is provided comprising computer-executable instructions for causing the device to perform steps recited in the method of the first aspect when the computer-executable instructions are executed on a processing unit included in the device.

In a fourth aspect, a computer program product according to claim 9 is provided comprising a computer readable medium, the computer readable medium having the computer program according to the third aspect embodied thereon.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Figure 1 illustrates a tightening tool configured to apply a torque to a fastener, in which tool embodiments may be implemented;
Figures 2a-d illustrates different types of undesired tightening operations which may be performed by the tool during a tightening program;
Figure 3 illustrates training of an ML model;
Figure 4 illustrates utilizing the trained ML model of Figure 3 for estimation of tightening classes;
Figure 5 shows a flowchart illustrating a method for determining a tightening class of a tightening operation performed by the tightening tool;
Figure 6 illustrates training of an ML model according to an embodiment;
Figure 7 illustrates utilizing the trained ML model of Figure 6 for estimation of tightening classes according to an embodiment; and
Figure 8 shows a flowchart illustrating a method of estimating tightening classes according to an embodiment.

### DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

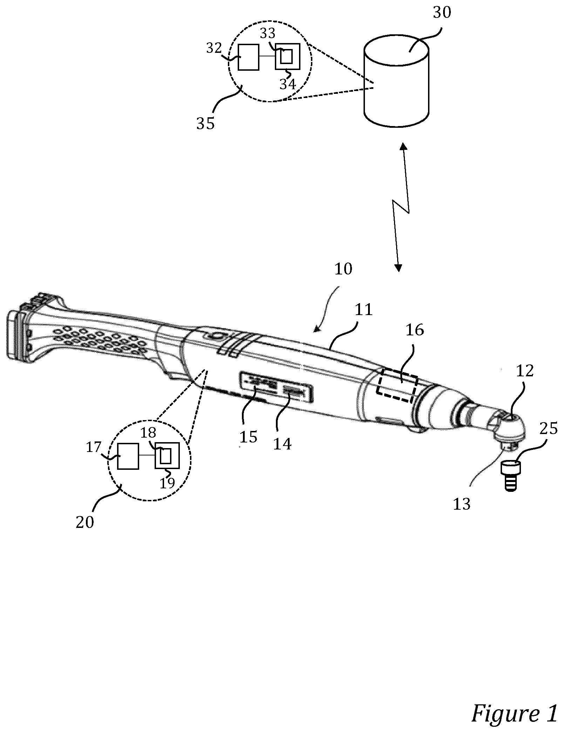

Figure 1 illustrates an industrial tool in the form of a tightening tool 10 configured to apply a torque to a fastener such as a bolt 25 for tightening a joint, for which tool embodiments may be implemented.

The tightening tool 10 may be cordless or electrically powered via a cord and has a main body 11 and a tool head 12. The tool head 12 has an output shaft 13 with a socket (not shown) configured to be rotatably driven by an electric motor arranged inside the main body 11 to apply the torque to the bolt 25.

The tightening tool 10 may be arranged with a display 14 via which an operator of the tool 10 may be presented with information relating to operation of the tool 10, and an interface 15 via which the operator may input data to the tool 10.

The tightening tool 10 may further be arranged with communicating capability in the form of a radio transmitter/receiver 16 for wirelessly transmitting operational data, such as applied torque, to a remotely located controller such as a cloud server 30 or a device such as a server executing on the premises. Alternatively, communication between the tool 10 and the controller 30 may be undertaken via a wired connection.

Thus, the tool 10 may for instance communicate measured operational data to the controller 30 for further evaluation while the controller 30 e.g. may send operational settings to be applied by the tool 10 or instructions to be displayed to the operator via the display 14, or even automatically configure the tool 10. As is understood, the method of determining a configuration of the tool 10 according to embodiments may be performed in the tool 10 or in the cloud server 30 (or even in combination where some steps are performed in one device and others are performed in the other). Thus, the tool 10 is typically equipped with a control device 20 and the cloud server 30 comprises a similar control device 35 housing the same or similar data processing components, as will be described in the following.

The steps of the method to be described in the following as performed by the tool 10 and/or the cloud server 30 are in practice performed by a control device 20 and/or 35, respectively, comprising a processing unit 17, 32 embodied in the form of one or more microprocessors arranged to execute a computer program 18, 33 downloaded to a storage medium 19, 34 associated with the microprocessor, such as a Random Access Memory (RAM), a Flash memory or a hard disk drive. The processing unit 17, 32 is arranged to cause the tool 10 and/or cloud server 30 to carry out the method according to embodiments when the appropriate computer program 18. 33 comprising computer-executable instructions is downloaded to the storage medium 19, 34 and executed by the processing unit 17, 32. The storage medium 19, 34 may also be a computer program product comprising the computer program 18, 33. Alternatively, the computer program 18 may be transferred to the storage medium 19, 34 by means of a suitable computer program product, such as a Digital Versatile Disc (DVD) or a memory stick. As a further alternative, the computer program 18, 33 may be downloaded to the storage medium 19, 34 over a network. The processing unit 17, 32 may alternatively be embodied in the form of a digital signal processor (DSP), an application specific integrated circuit (ASIC), a field-programmable gate array (FPGA), a complex programmable logic device (CPLD), etc. The control device 20, 35 is communicatively connected to the interface for external communication, for instance from the tool 10 to the cloud server 30 and vice versa.

The control device 20 may be arranged inside the tightening tool 10 or in connection to the tool 10, for instance as a control device 20 attached to an external side of the main body 11 of the tool 10.

The processing unit 17 is in communicative connection with one or more sensors (not shown) for measuring the torque applied to the bolt 25 and a rotation angle of the output shaft 13 of the tightening tool 10 upon applying the torque.

Now upon an operator using the tightening tool 10 to tighten a fastener such as the bolt 25, it is important that the tightening operation is performed correctly for the tightened bolt 25 to maintain its fastening durability. If not, there is a risk that the tightening becomes inferior which in worst case may cause the bolt 25 to unscrew. Thus, it is crucial that the bolt 25 is correctly tightened and if not, it is desirable to attain an indication accordingly such that the operator may utilize the tool 10 to correctly retighten the bolt 25. Commonly, an incorrect tightening is referred to as a not ok (NOK) tightening, while a correct tightening conversely is referred to as OK.

One such tightening operation performed by the tool 10 (and its human operator) is referred to as disengagement. During disengagement, the torque values suddenly drop to zero before completion of the tightening program being performed.

If for instance the torque values suddenly drop to zero before completion of the tightening, disengagement between the output shaft 13 (and socket) and the bolt 25 may have occurred. This may be caused by operator behaviour, worn out tool parts and/or fasteners, incorrect tool programming, etc.

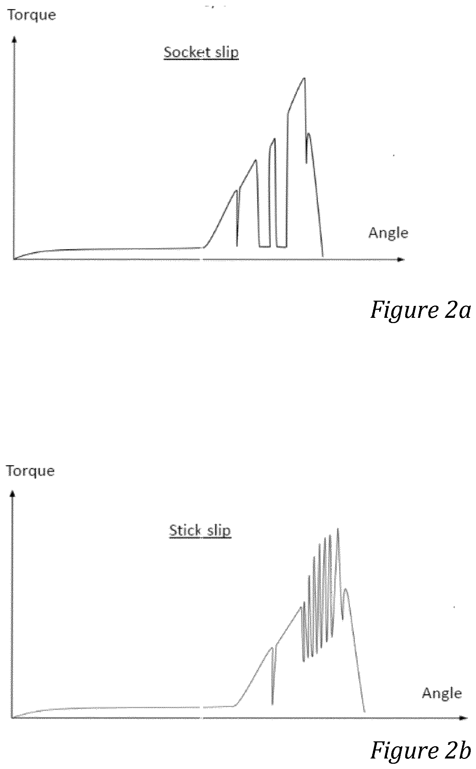

Figures 2a-d illustrate a plurality of undesired tightening operations being performed by the tool 10. The combination of the torque and angle values for a tightening program being performed is sometimes referred to as a *trace.*

Figure 2a illustrates a particular type of tightening operation commonly referred to as socket slip, which may occur when the torque value increases and decreases at periodical angle intervals.

Figure 2b illustrates another particular type of tightening operation commonly referred to as stick slip, which may occur when the torque values fluctuate at a high frequency.

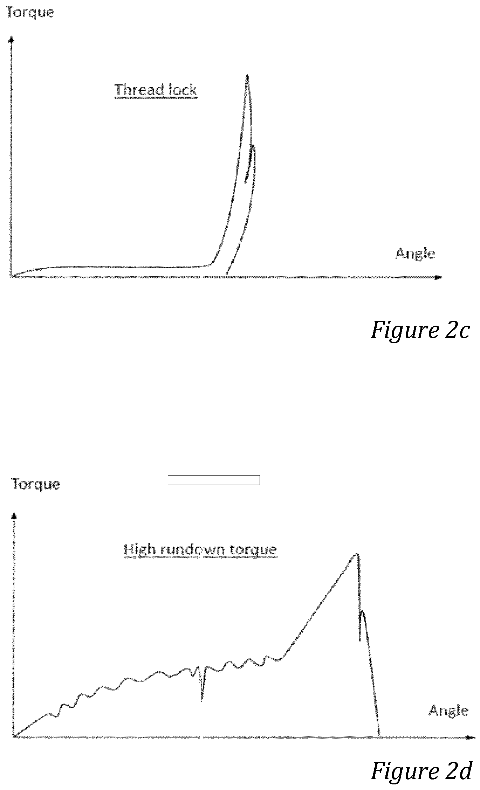

Figure 2c illustrates another particular type of tightening operation; a socalled thread lock which may occur when the applied torque reaches a target torque immediately after a rundown phase. This is typically caused by the threads of the bolt 25 that is tightened suddenly locking, for example because of the bolt 25 being entered into the thread at an angle or if the dimensions are not correct.

Finally, Figure 2d illustrates a further particular type of tightening operation referred to as high rundown torque which may occur when the applied torque reaches a target torque during a rundown phase. This is typically caused by friction in the thread of the bolt 25 being higher than normal, for example because of the bolt 25 having an incorrect dimension, wrong thread coating or that the bolt 25 was slanted upon entering the thread.

As is understood, these are examples of incorrect tightening operations being performed by the tool 10, which preferably should be avoided. However, should they still occur, it is desirable that an operator or some supervision function is informed thereof.

Hence, in an embodiment, a trained machine-learning (ML) model is used to determine from acquired torque and angle values whether or not an incorrect tightening operation has been performed and if so, which particular type of tightening operation has been performed, i.e. whether it is one of the above-mentioned "disengage", "socket slip", "stick slip", "thread lock" and "high rundown torque" (or any other identified tightening operation. In practice, there are numerous different types other than those illustrates in Figures 2a-d).

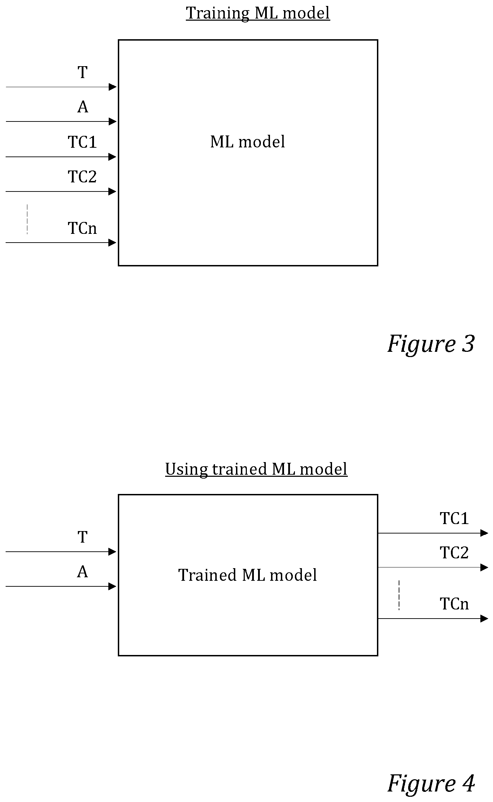

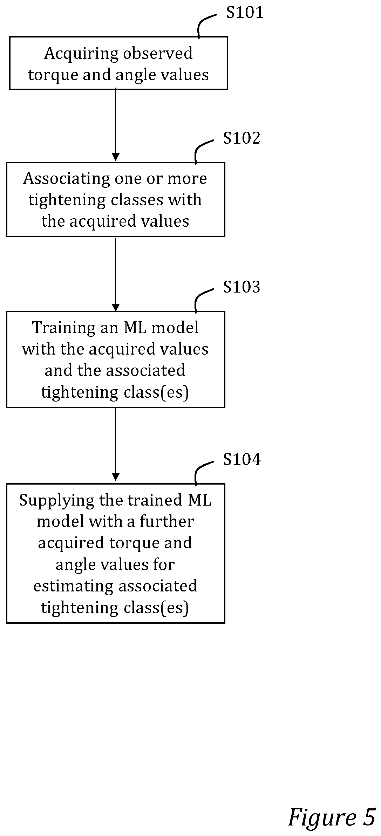

Figure 3 illustrates the training of the ML model according to an example, while Figure 4 illustrates utilizing the trained ML model to estimate a tightening class for a supplied set of torque and angle values during a tightening operation. Reference is further made to Figure 5 showing a flowchart illustrating a method for determining a tightening class of a tightening operation performed by the tightening tool 10.

Thus, during a training phase, one or more sets of observed torque values T and angle values A for bolts 25 having been tightened by the tightening tool 10 is acquired in step S101. Thus, these are the torque and angle values previously illustrated with reference to the graphs of Figures 2a-d.

For instance, each set may comprise, say, a hundred torque values and corresponding angle values acquired by the processing unit 17 upon the tightening tool 10 performing a tightening program. Further, hundreds or even thousands of sets of torque and angle values may be supplied to the ML model for thorough training.

Any acquired torque and angle values may be stored locally in the memory 19 and/or communicated wirelessly via the radio transmitter 16 to the remotely located cloud server 30 or other appropriate device separated from the tool 10, such as a server located on the premises.

In step S102, a tightening class TC is associated with each set of acquired torque and angle values. This tightening class thus identifies the type of tightening operation having been applied to the fasteners. As previously exemplified, the tightening class may include "disengage", "socket slip", stick slip", "thread lock" and "high rundown torque", etc., or any other identified type of tightening operation.

In practice, the operator of the tool 10 typically identifies from the acquired sets of torque and angles values with which particular tightening class a set of measured values is to be associated. For instance, if the observed torque values T and angle values A have the appearance of Figure 2b as presented to the operator via the display 14, the operator concludes that the associated tightening class should be "stick slip" and inputs information identifying the tightening class via the interface 15 to the tool 10.

The identified tightening class is supplied to the ML model for training along with the acquired set of torque and angle values in step S103.

This is typically repeated for a large number of sets of observed torque and angle values, and the ML model will thus be effectively trained in step S103 to associate a tightening class TC with each supplied set of torque and angle values T, A.

While a single-label tightening ML model may be utilized where each set of observed torque and angle values T, A is associated to one tightening class TC only ("stick slip", "socket slip", "thread lock", etc., as discussed above) it may also be envisaged that a multi-label tightening ML model is utilized where each set of observed torque and angle values T, A is associated with a plurality of tightening classes TC1, TC2, ..., TCn as illustrated in Figure 3.

As an example, it may be envisaged that each of the above illustrated tightening operation types of Figures 2a-d, i.e. "socket slip", stick slip", "thread lock" and "high rundown torque" is defined utilizing a first tightening class TC1, while a second complementing tightening class TC2 is utilized for indicating an OK/NOK tightening operation.

As is understood, the tightening tool 10 can generally indicate an OK/NOK tightening based on predetermined threshold values, while the ML model also may indicate an OK/NOK tightening based on training data. Thus, the OK/NOK assessment of the tightening tool 10 and the ML model, respectively, may be evaluated wherein the ML model provides a second opinion on the performed tightening operation.

For instance, if the tightening tool 10 itself (i.e. the processing unit 17) indicates a NOK operation while the trained ML model indicates an OK operation - or vice versa - there may be an issue and the operator of the tool may be alerted accordingly.

In another example, it may also be that a trace indicates two different types of tightening operations being performed for one and the same trace. For instance, a trace may constitute *both* a "socket slip" and a "stick slip", in which case (at least) two classes are assigned to the trace; TC1 = "socket slip" and TC2 = "stick slip", to indicate that the trace represents both a socket slip operation and a stick slip operation, and even further classes such as TC3 = "thread lock" should that be applicable. Thus, several exclusive tightening classes may correctly be assigned to the same trace in a multi-label setting.

In another example, there are typically two phases during a tightening operation, a first is the rundown phase where the tool 10 operates at a high speed when the resistance of the joint to be tightened by the bolt 10 is low, and a second end-tightening phase where the tool 10 slows as the torquing up proceeds. It may thus be desirable to assign a first tightening class TC1 to the torque and angle values T, A observed for the initial rundown phase (e,g. "OK/NOK"), and a second tightening class TC2 to the torque and angle values T, A of the final end-tightening phase (e.g. "OK/NOK"), and/or even to specifically indicate the rundown phase with TC1 and the end-tightening phase with TC2 for the same trace.

In addition, a tightening class TC3 may be introduced indicating whether or not the bolt 25 for some reason has been damaged during the tightening operation, and even a tightening class TC4 specifying whether or not there is an indication that a joint to be tightening by the bolt 25 has been damaged. As is understood, numerous tightening classes TC1, TC2, ..., TCn may be associated with a tightening operation.

Thus, as shown in Figure 4, upon a tightening program subsequently being performed by the tool 10, the trained ML model is supplied in step S104 with a further acquired set of observed torque and angle values T, A for the tightening program being performed.

As a result, the trained ML model will advantageously output one or more estimated tightening classes TC1, TC2, ..., TCn for the further set of observed torque and angle values T, A supplied to the trained ML model during the tightening operation, for instance via the display 14 such that the operator can determine whether or not the tightening program is to be re-performed. Hence, the trained ML model will facilitate detection of tightening classes TC from supplied torque and angle values T, A being registered during a tightening operation.

Alternatively, rather than having the control device 20 of the tool 10 performing steps S101-S104, it may be envisaged that torque and angle values T, A are communicated by the tool 10 via transceiver 16 to the cloud server 30 being equipped with a corresponding control device 35 for performing steps S101-S104, which would relieve the processing unit 17 of the tool 10 from computational burden. The cloud server 30 may send information indicating the estimated tightening class to the tool 10 via the transceiver 16, which presents an alert of the tightening class to the operator via the display 14 or audibly via a small speaker included with the tool 10.

In another alternative, the training of the ML model as set out in steps S101-S103 is undertaken by the server 30, which server then supplies the tool 10 with the trained ML model. The tool 10 may then store the trained ML model in the memory 19 and thus locally execute step S104.

It may be envisaged that the cloud server 30 may have access to torque and angle values of a multitude of tightening tools of the same type as the tool 10, thus facilitating training of the ML model with a massive quantity of training data.

However, in practice, it may occur that the tightening classes TC estimated by the trained model is incorrect. For instance, it may be that the trained ML model for some reason is not a good fit for a given individual tool, that the trained ML model performs poorly for a tightening tool of one type but performs well for another similar type of tightening tool, or more straightforwardly that a set of torque and angle values shows characteristics which may be correctly associated with more than one tightening class.

In another example, it may be envisaged that the ML model is sensitive to a given tightening application or environment; for instance, it may be envisaged that the trained ML model performs highly accurate tightening class estimations for small-scale bolts but less accurate estimations not for large-scale bolts, or that the trained ML model fits well with one type of joint to be tightened but not with another type, and so on.

Thus, to provide for a better trained ML model which ultimately will perform more accurate estimations of tightening class(es) associated with sets of torque and angle values T, A being input to the trained ML model, it is proposed that the training of the ML model further advantageously includes training the ML model by utilizing carefully selected context data.

Context data may be data related to the current or one or more previous tightenings *further to* the trace data of the current tightening (i.e. the observed torque and angle values of the current tightening). The context data may thus place the observed torque and angle values in a context that can be helpful for the ML model to determine a tightening class. Further envisaged context data to be considered is environmental data such as e.g. temperature, humidity, atmospheric pressure, etc.

For instance, in a scenario where a tightening operation of type "socket slip" of Figure 2a has been performed, it could be that the features of the acquired torque and angle values T, A utilized for determining that a sock slip operation indeed has been performed are subtle and as a result the tightening operation is incorrectly estimated to be, say, a stick slip operation as illustrated in Figure 2b (while in another scenario, the features are highly distinct and unambiguously indicates a socket slip operation).

An even more undesired scenario is that a NOK tightening operation - such as the just-mentioned socket slip or stick slip operation - is classified as an OK operation, in which case the operator of the tool 10 will not be alerted that re-tightening is required. Conversely, an OK operation could be mistaken for a NOK operation in which case the operator will perform an unnecessary re-tightening.

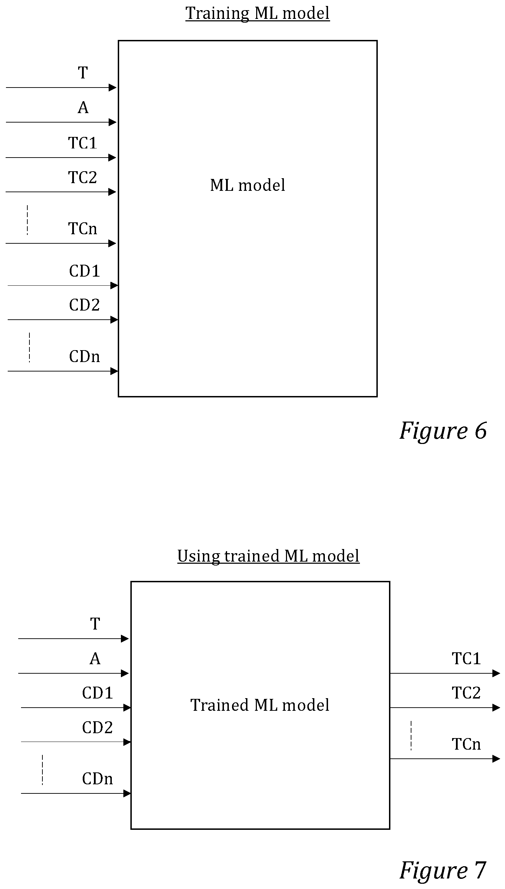

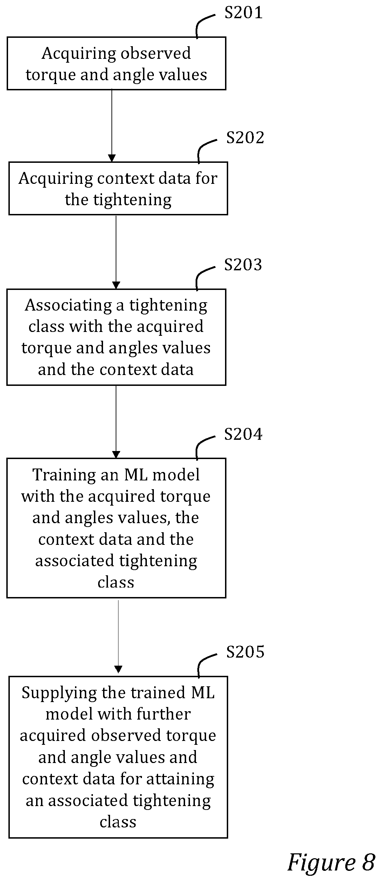

Figure 6 illustrates training of an ML model using one or more sets of context data CD1, CD2, ..., CDn. As is understood, this may range from a single set of context data to tens or even hundreds of sets of context data. Further, Figure 7 illustrates subsequently using the trained ML model to estimate a tightening class for a given set of observed torque and angle values data and corresponding context data. Refence will further be made to Figure 8 showing a flowchart illustrating a method for determining a tightening class of a tightening operation performed by the tightening tool 10 according to an embodiment.

In an exemplifying embodiment, the context data is embodied in the form of average torque that was applied by the tool 10 to the bolt 25 in the immediately preceding tightening operation or in a plurality of preceding tightening operations, such as the last five tightenings. Hence, for illustration, a single set of context data CD1 is supplied to the ML model to be trained in the form of the average torque being applied during one or more preceding tightening operations.

In brief, there are typically two phases during a tightening operation, a first is the rundown phase where the tool 10 operates at a high speed when the resistance of the joint to be tightened by the bolt 10 is low, and a second end-tightening phase where the tool 10 slows as the torquing up proceeds (illustrated in Figure 2d by the sudden increase in torque being applied).

In this exemplifying embodiment, with reference to Figure 2d, it is assumed that a "high rundown torque" has been performed. However, it could be scenarios where the difference between tightening of the type "high rundown torque" and a normal OK tightening is subtle and may be hard to distinguish from each other.

Therefore, in addition to acquiring a set of torque and angle values having been applied to the bolt 25 by the tool 10 in step S201, the context data CD1 is acquired in step S202, in this case in the form of the average torque applied during the immediately preceding tightening operation.

As illustrated in Figures 2a-d, the average torque applied during a "high rundown torque" operation would typically be relatively higher than in the other scenarios due to the relatively high torque being applied in the initial rundown phase. Thus, if the average torque, referred to as T_mean, e.g. exceeds a torque threshold value TT, there is an indication that a "high rundown torque" operation has been performed.

Thus, by taking into consideration the context data CD1 = T_mean, the ML model can be trained such that if the set of torque and angle values T, A of the currently performed tightening operation indicates that the trace may be "high rundown torque", this hypothesis is advantageously strengthened by further considering the context data CD1, in this case indicating a high average torque having been applied.

Thus, the current set of torque and angle values T, A will be associated with TC1 = "high rundown torque" and CD1 = T_mean in step S203 .

In an embodiment, it is further envisaged that a second tightening class TC2 is associated with the set of torque and angles values T, A indicating a NOK tightening, i.e. TC2 = "NOK".

Advantageously, the ML model is more accurately trained in step S204 by further supplying the context data during the training, in this case CD1 = "T_mean", in addition to the torque and angle values T, A and the tightening class TC1 (and potentially TC2).

For instance, the high rundown torque of the current tightening in combination with the high average torque of the last tightening this may be an undesired result of the tightening tool 10 being used on harder joints than what the tool 10 has been configured for, or that a different type of bolt 25 should be used for the joint. In other words, characteristics of the joint or bolt may also constitute context data, where for instance the hardness of the joint is taken into consideration. As an example, the harder the joint, the more likely it is that a "high rundown torque" operation will occur.

In another example, where environmental data is taken into consideration as context data; the higher the humidity, the more likely it is that a "socket slip" operation will occur.

As is understood, during the training of the ML, operator of the tool 10 may have to conclude that the current trace indeed is a "high rundown torque" (or "stick slip", socket slip", etc.). Further, the ML model will in practice typically be trained with hundreds of sets of observed torque and angle values T, A and corresponding context data, with which tightening classes are associated.

Subsequently, with reference to Figure 7, upon the trained ML model being utilized to estimate a tightening class for a bolt being tightening by the tool 10 in step S205, a further set of observed torque and angle values T, A for a bolt to be tightened is acquired and supplied to the trained ML model along with the acquired context data CD1 = T_mean.

Thus, if the further set of observed torque and angle values T, A indicates a high rundown torque operation being performed and the context data CD1 indicates a high average torque having been applied during a preceding tightening, the trained ML model will indeed output TC1 = "high rundown toque" (and possibly TC2 = "NOK") as a tightening class estimate.

Advantageously, rather than just relying on the torque and angle values T, A being supplied to the trained ML model, the TC estimation of step S205 will further be strengthened by also taking into account the context data CD1.

In embodiments, numerous sets of context data may be considered, and the context data may comprise e.g. maximum torque and angle of the previous trace, maximum torque and angle of the previous OK trace, final angle difference between the existing and previous trace, final angle difference between the existing and previous OK trace, final torque difference between the existing and previous trace, final torque difference between the existing and previous OK trace, derivative information of torque and angles values, etc.

In further embodiments, the context data comprises properties of the fastener and/or the joint being tightened by the fastener.

In another exemplifying embodiment, assuming for instance with reference again to Figure 6 that for a given set of torque and angle values T, A, it cannot certainly be determined whether or not a tightening is OK or not. For instance, the trace being input by means of T, A to the ML model for training indicates both that the tightening is an OK tightening and that the bolt 25 may have been damaged. However, TC1 = "OK" and TC2 = "bolt damaged" should not both be associated with the trace being input.

Thus, in this example, context data is being acquired in step S202 in the form of the final angle that was applied by the tool 10 in the last preceding tightening operation (or during the last N operations). If CD1 = "final angle" indicates that the tightening angle applied during previous operations consequently has been slightly high, this may be supplied to the ML model to indicate that TC2 = "bolt damaged" is a more likely tightening class to be associated with the trace along with CD1 in step S203 then TC1 = "OK", for ML model training in step S204.

In contrast, should TC1 = "NOK", then both TC1 and TC2 " "bolt damaged" will appropriately be associated with the trace along with CD1 = "final angle" in step 203.

In embodiments, approaches utilized for training the ML model include neural networks, random forest-based classification, regression analysis, etc. An advantage of neural networks is their ability to learn to extract both temporal and spatial patterns from data sets.

The training of the ML model and the subsequent determining of tightening class for torque and angle values observed during a tightening program may be performed locally by the processing unit 16, or by the cloud server 30. The determined tightening class may be immediately communicated to the operator of the tool 10 via e.g. the display 14. As a consequence, the operator may unscrew the bolt 25 and perform a new tightening program in order to attain an adequate tightening.

It is envisaged that the steps S201-S205 of the method according to embodiments may be performed by the control device 20 arranged in the tool 10 itself. However, it may also be envisaged that torque and angle values and the context data are measured by the tool 10 and then communicated via transmitter 16 to the cloud server 30 being equipped with a corresponding control device 35 for performing the TC estimation and subsequently all steps S201-S205, which would relieve the processing unit 16 from the computational burden.

If may further be envisaged that the tool 10 performs all steps S201-S205 and then alerts the cloud server 30 of the estimation of the tightening class (possibly along with alerting the operator), which may hold a database accordingly, or provides the alert e.g. to a supervision control room.

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims.

Thus, while various aspects and embodiments have been disclosed herein, other aspects and embodiments will be apparent to those skilled in the art. The various aspects and embodiments disclosed herein are for purposes of illustration and are not intended to be limiting, with the true scope being defined by the following claims.

## Claims

1. A method for determining a tightening class of a tightening operation performed by a tightening tool (10), the method comprising:
acquiring (S201) a set of observed torque and angle values for a fastener (25) having been tightened by the tightening tool (10); the method being **characterized in** comprising:
acquiring (S202) at least one set of context data associated with the tightening of the fastener (25) by the tightening tool (10), which context data comprises at least one of torque and angle values having been applied by the tightening tool (10) during a previously performed tightening operation;
associating (S203) at least one tightening class with the set of observed torque and angle values and the at least one set of context data, the tightening class identifying a type of tightening operation having been applied to the fastener (25);
training (S204) a machine-learning model with the acquired set of observed torque and angle values, the acquired at least one set of context data and the associated at least one tightening class; and
supplying (S205) the trained machine-learning model with a further acquired set of observed torque and angle values for a fastener having been tightened by the tightening tool (10) and at least one further set of context data associated with the tightening of the fastener (25) by the tightening tool (10), wherein the trained machine-learning model outputs at least one estimated tightening class for the supplied further set of observed torque and angle values and the at least one further set of context data.

2. The method of claim 1, wherein the context data comprises properties of the fastener (25) and/or joint being tightened by the fastener (25).

3. The method of any one of the preceding claims, wherein the context data comprises environmental properties.

4. The method of any one of the preceding claims, further comprising providing an alert indicating the at least one estimated tightening class.

5. The method according to claim 4, wherein the alert is provided to an operator of the tightening tool (10), to the tightening tool (10) itself, to a supervision control room or to a remote cloud function (30).

6. The method according to claim 5, wherein the tightening tool (10) provides an audible and/or visual alert to the operator of the tool (10).

7. The method of any one of the preceding claims, wherein the machine learning is based on one or more of neural networks, random forest-based classification and regression analysis.

8. A computer program (18, 33) comprising computer-executable instructions for causing the device (20, 35) of any one of claims 10-13 to perform the method recited in any one of claims 1-7 when the computer-executable instructions are executed on a processing unit (17, 32) included in the device (20, 35).

9. A computer program product comprising a computer readable medium (19, 34), the computer readable medium having the computer program (18, 33) according to claim 8 embodied thereon.

10. A device (20, 35) configured to determine a tightening class of a tightening operation performed by a tightening tool (10), the device (20, 35) comprising a processing unit (17, 32) operative to cause the device (20, 35) to:
acquire (S201) a set of observed torque and angle values for a fastener (25) having been tightened by the tightening tool (10); the device being characterized to:
acquire (S202) at least one set of context data associated with the tightening of the fastener (25) by the tightening tool (10), which context data comprises at least one of torque and angle values having been applied by the tightening tool (10) during a previously performed tightening operation;
associate (S203) at least one tightening class with the set of observed torque and angle values and the at least one set of context data, the tightening class identifying a type of tightening operation having been applied to the fastener (25);
train (S204) a machine-learning model with the acquired set of observed torque and angle values, the acquired at least one set of context data and the associated at least one tightening class; and to
supply (S205) the trained machine-learning model with a further acquired set of observed torque and angle values for a fastener having been tightened by the tightening tool (10) and at least one further set of context data associated with the tightening of the fastener (25) by the tightening tool (10), wherein the trained machine-learning model outputs at least one estimated tightening class for the supplied further set of observed torque and angle values and the at least one further set of context data.

11. The device (20, 35) of claim 10, wherein the context data comprises properties of the fastener (25) and/or joint being tightened by the fastener (25).

12. The device (20, 35) of any one of claims 10-11, wherein the context data comprises environmental properties.

13. The device (20, 35) of any one of claims 10-12, further comprising providing an alert indicating the at least one estimated tightening class.

## Patentansprüche

1. Verfahren zum Bestimmen einer Festziehklasse eines Festziehvorgangs, der durch ein Festziehwerkzeug (10) durchgeführt wird, das Verfahren umfassend:
Erfassen (S201) eines Satzes von beobachteten Drehmoment- und Winkelwerten für ein Befestigungselement (25), das durch das Festziehwerkzeug (10) festgezogen wurde; wobei das Verfahren **dadurch gekennzeichnet ist, dass** es umfasst:
Erfassen (S202) mindestens eines Satzes von Kontextdaten, die dem Festziehen des Befestigungselements (25) durch das Festziehwerkzeug (10) zugeordnet sind, wobei die Kontextdaten mindestens eines von Drehmomentund Winkelwerten umfassen, die durch das Festziehwerkzeug (10) während eines zuvor durchgeführten Festziehvorgangs angewendet wurden;
Zuordnen (S203) mindestens einer Festziehklasse zu dem Satz von beobachteten Drehmoment- und Winkelwerten und dem mindestens einen Satz von Kontextdaten, wobei die Festziehklasse eine Art von Festziehvorgang identifiziert, der auf das Befestigungselement (25) angewendet wurde;
Trainieren (S204) eines Maschinenlernmodells mit dem erfassten Satz von beobachteten Drehmoment- und Winkelwerten, dem erfassten mindestens einen Satz von Kontextdaten und der zugeordneten mindestens einen Festziehklasse; und
Liefern (S205), an das trainierte Maschinenlernmodell, eines weiteren erfassten Satzes von beobachteten Drehmoment- und Winkelwerten für ein Befestigungselement, das mit dem Festziehwerkzeug (10) festgezogen wurde, und mindestens einem weiteren Satz von Kontextdaten, die dem Festziehen des Befestigungselements (25) durch das Festziehwerkzeug (10) zugeordnet sind, wobei das trainierte Maschinenlernmodell mindestens eine geschätzte Festziehklasse für den gelieferten weiteren Satz von beobachteten Drehmoment- und Winkelwerten und den mindestens einen weiteren Satz von Kontextdaten ausgibt.

2. Verfahren nach Anspruch 1, wobei die Kontextdaten Eigenschaften des Befestigungselements (25) und/oder eines Verbindungsstücks umfassen, die durch das Befestigungselement (25) festgezogen werden.

3. Verfahren nach einem der vorstehenden Ansprüche, wobei die Kontextdaten Umgebungseigenschaften umfassen.

4. Verfahren nach einem der vorstehenden Ansprüche, ferner umfassend das Bereitstellen einer Warnung, die die mindestens eine geschätzte Festziehklasse angibt.

5. Verfahren nach Anspruch 4, wobei die Warnung einem Bediener des Festziehwerkzeugs (10), dem Festziehwerkzeug (10) selbst, einer Überwachungssteuerzentrale oder einer Remote-Cloud-Funktion (30) bereitgestellt wird.

6. Verfahren nach Anspruch 5, wobei das Festziehwerkzeug (10) dem Bediener des Werkzeugs (10) eine akustische und/oder optische Warnung bereitstellt.

7. Verfahren nach einem der vorstehenden Ansprüche, wobei das maschinelle Lernen auf einem oder mehreren von neuronalen Netzwerken, Random-Forest-basierter Klassifizierung und Regressionsanalyse basiert.

8. Computerprogramm (18, 33), umfassend computerausführbare Anweisungen zum Veranlassen, dass die Vorrichtung (20, 35) nach einem der Ansprüche 10 bis 13 das in einem der Ansprüche 1 bis 7 angegebene Verfahren durchführt, wenn die computerausführbaren Anweisungen auf einer Verarbeitungseinheit (17, 32), die in der Vorrichtung (20, 35) eingeschlossen ist, ausgeführt werden.

9. Computerprogrammprodukt, umfassend ein computerlesbares Medium (19, 34), wobei das computerlesbare Medium das Computerprogramm (18, 33) nach Anspruch 8 darauf verkörpert aufweist.

10. Vorrichtung (20, 35), die konfiguriert ist, um eine Festziehklasse eines durch ein Festziehwerkzeug (10) durchgeführten Festziehvorgangs zu bestimmen, wobei die Vorrichtung (20, 35) eine Verarbeitungseinheit (17, 32) umfasst, die dazu dient, die Vorrichtung (20, 35) zu Folgendem zu veranlassen:
Erfassen (S201) eines Satzes von beobachteten Drehmoment- und Winkelwerten für ein Befestigungselement (25), das durch das Festziehwerkzeug (10) festgezogen wurde; wobei die Vorrichtung **gekennzeichnet ist durch:**
Erfassen (S202) mindestens eines Satzes von Kontextdaten, die dem Festziehen des Befestigungselements (25) **durch** das Festziehwerkzeug (10) zugeordnet sind, wobei die Kontextdaten mindestens eines von Drehmomentund Winkelwerten umfassen, die **durch** das Festziehwerkzeug (10) während eines zuvor durchgeführten Festziehvorgangs angewendet wurden;
Zuordnen (S203) mindestens einer Festziehklasse zu dem Satz von beobachteten Drehmoment- und Winkelwerten und dem mindestens einen Satz von Kontextdaten, wobei die Festziehklasse eine Art von Festziehvorgang identifiziert, der auf das Befestigungselement (25) angewendet wurde;
Trainieren (S204) eines Maschinenlernmodells mit dem erfassten Satz von beobachteten Drehmoment- und Winkelwerten, dem erfassten mindestens einen Satz von Kontextdaten und der zugeordneten mindestens einen Festziehklasse; und **durch**
Liefern (S205), an das trainierte Maschinenlernmodell, eines weiteren erfassten Satzes von beobachteten Drehmoment- und Winkelwerten für ein Befestigungselement, das mit dem Festziehwerkzeug (10) festgezogen wurde, und mindestens einem weiteren Satz von Kontextdaten, die dem Festziehen des Befestigungselements (25) **durch** das Festziehwerkzeug (10) zugeordnet sind, wobei das trainierte Maschinenlernmodell mindestens eine geschätzte Festziehklasse für den gelieferten weiteren Satz von beobachteten Drehmoment- und Winkelwerten und den mindestens einen weiteren Satz von Kontextdaten ausgibt.

11. Vorrichtung (20, 35) nach Anspruch 10, wobei die Kontextdaten Eigenschaften des Befestigungselements (25) und/oder eines Verbindungsstücks umfassen, die durch das Befestigungselement (25) festgezogen werden.

12. Vorrichtung (20, 35) nach einem der Ansprüche 10 bis 11, wobei die Kontextdaten Umgebungseigenschaften umfassen.

13. Vorrichtung (20, 35) nach einem der Ansprüche 10 bis 12, ferner umfassend das Bereitstellen einer Warnung, die die mindestens eine geschätzte Festziehklasse angibt.

## Revendications

1. Procédé de détermination d'une classe de serrage d'une opération de serrage effectuée par un outil de serrage (10), le procédé comprenant :
l'acquisition (S201) d'un ensemble de valeurs de couple et d'angle observées pour un élément de fixation (25) ayant été serré par l'outil de serrage (10) ; le procédé étant **caractérisé en ce qu'**il comprend :
l'acquisition (S202) d'au moins un ensemble de données contextuelles associées au serrage de l'élément de fixation (25) par l'outil de serrage (10), lesquelles données contextuelles comprennent au moins l'une des valeurs de couple et d'angle ayant été appliquées par l'outil de serrage (10) au cours d'une opération de serrage précédemment effectuée ;
l'association (S203) d'au moins une classe de serrage avec l'ensemble de valeurs de couple et d'angle observées et ledit au moins un ensemble de données contextuelles, la classe de serrage identifiant un type d'opération de serrage ayant été appliqué à l'élément de fixation (25) ;
l'entraînement (S204) d'un modèle d'apprentissage automatique avec l'ensemble acquis de valeurs de couple et d'angle observées, ledit au moins un ensemble acquis de données contextuelles et ladite au moins une classe de serrage associée ; et
la fourniture (S205) au modèle d'apprentissage automatique entraîné d'un ensemble supplémentaire acquis de valeurs de couple et d'angle observées pour un élément de fixation ayant été serré par l'outil de serrage (10) et d'au moins un ensemble supplémentaire de données contextuelles associées au serrage de l'élément de fixation (25) par l'outil de serrage (10), dans lequel le modèle d'apprentissage automatique entraîné délivre en sortie au moins une classe de serrage estimée pour l'ensemble supplémentaire fourni de valeurs de couple et d'angle observées et ledit au moins un ensemble supplémentaire de données contextuelles.

2. Procédé selon la revendication 1, dans lequel les données contextuelles comprennent des propriétés de l'élément de fixation (25) et/ou d'un joint serré par l'élément de fixation (25).

3. Procédé selon l'une quelconque des revendications précédentes, dans lequel les données contextuelles comprennent des propriétés environnementales.

4. Procédé selon l'une quelconque des revendications précédentes, comprenant en outre la fourniture d'une alerte indiquant l'au moins une classe de serrage estimée.

5. Procédé selon la revendication 4, dans lequel l'alerte est fournie à un opérateur de l'outil de serrage (10), à l'outil de serrage (10) lui-même, à une salle de commande de supervision ou à une fonction nuage à distance (30).

6. Procédé selon la revendication 5, dans lequel l'outil de serrage (10) fournit une alerte audible et/ou visuelle à l'opérateur de l'outil (10).

7. Procédé selon l'une quelconque des revendications précédentes, dans lequel l'apprentissage automatique est basé sur un ou plusieurs parmi des réseaux de neurones, une classification par forêts aléatoires et une analyse de régression.

8. Programme informatique (18, 33) comprenant des instructions exécutables par ordinateur destinées à amener le dispositif (20, 35) selon l'une quelconque des revendications 10 à 13 à effectuer le procédé selon l'une quelconque des revendications 1 à 7 lorsque les instructions exécutables par ordinateur sont exécutées sur une unité de traitement (17, 32) incluse dans le dispositif (20, 35).

9. Produit-programme informatique comprenant un support lisible par ordinateur (19, 34), le support lisible par ordinateur ayant le programme informatique (18, 33) selon la revendication 8 intégré sur celui-ci.

10. Dispositif (20, 35) configuré pour déterminer une classe de serrage d'une opération de serrage effectuée par un outil de serrage (10), le dispositif (20, 35) comprenant une unité de traitement (17, 32) fonctionnant pour amener le dispositif (20, 35) à :
acquérir (S201) un ensemble de valeurs de couple et d'angle observées pour un élément de fixation (25) ayant été serré par l'outil de serrage (10) ; le dispositif étant **caractérisé pour** :
acquérir (S202) au moins un ensemble de données contextuelles associées au serrage de l'élément de fixation (25) par l'outil de serrage (10), lesquelles données contextuelles comprennent au moins l'une des valeurs de couple et d'angle ayant été appliquées par l'outil de serrage (10) au cours d'une opération de serrage précédemment effectuée ;
associer (S203) au moins une classe de serrage à l'ensemble de valeurs de couple et d'angle observées et à l'au moins un ensemble de données contextuelles, la classe de serrage identifiant un type d'opération de serrage ayant été appliqué à l'élément de fixation (25) ;
entraîner (S204) un modèle d'apprentissage automatique avec l'ensemble acquis de valeurs de couple et d'angle observées, ledit au moins un ensemble acquis de données contextuelles et ladite au moins une classe de serrage associée ; et
fournir (S205) au modèle d'apprentissage automatique entraîné un ensemble supplémentaire acquis de valeurs de couple et d'angle observées pour un élément de fixation ayant été serré par l'outil de serrage (10) et au moins un ensemble supplémentaire de données contextuelles associées au serrage de l'élément de fixation (25) par l'outil de serrage (10), dans lequel le modèle d'apprentissage automatique entraîné délivre en sortie au moins une classe de serrage estimée pour l'ensemble supplémentaire fourni de valeurs de couple et d'angle observées et ledit au moins un ensemble supplémentaire de données contextuelles.

11. Dispositif (20, 35) selon la revendication 10, dans lequel les données contextuelles comprennent des propriétés de l'élément de fixation (25) et/ou d'un joint serré par l'élément de fixation (25).

12. Dispositif (20, 35) selon l'une quelconque des revendications 10 à 11, dans lequel les données contextuelles comprennent des propriétés environnementales.

13. Dispositif (20, 35) selon l'une quelconque des revendications 10 à 12, comprenant en outre la fourniture d'une alerte indiquant l'au moins une classe de serrage estimée.
